# EUROPEAN PATENT APPLICATION

(11) **EP 4 560 664 A2**
(43) Date of publication of application: **28.05.2025**
(21) Application number: 24206886.4
(22) Date of filing: 16.10.2024
(51) Int. Cl.: H01G 4/12, H01G 4/224, H01G 4/232, H01G 4/30

(54) **EXTERNAL ELECTRODES FOR A MULTILAYER CERAMIC COMPONENT HAVING A BOROSILICATE GLASS LAYER AT ITS UPPER AND LOWER ENDS**

(30) Priority: 21.11.2023 KR 20230162240
(71) Applicant: Samsung Electro-Mechanics Co., Ltd., Suwon-si, Gyeonggi-do (KR)
(72) Inventor: Kim, Jong Ryeong, Suwon-si, Gyeonggi-do (KR); Lee, Dae Hee, Suwon-si, Gyeonggi-do (KR)
(74) Representative: Grünecker Patent- und Rechtsanwälte PartG mbB

(57) **Abstract**

A multilayer electronic component (100),

comprising:

a body (110) including a dielectric layer (111) and nickel internal electrodes (121, 122) alternately disposed with the dielectric layer (111) in a first direction, and first and second surfaces (1, 2) opposing each other in the first direction, third and fourth surfaces (3, 4) connected to the first and second surfaces (1, 2) and opposing each other in a second direction, and fifth and sixth surfaces (5, 6) connected to the first to fourth surfaces (1, 2, 3, 4) and opposing each other in a third direction; and

external electrodes (131, 132) including a connection portion disposed on the third and fourth surfaces (3, 4), and a band portion in contact with the connection portion and disposed on a portion of the third and fourth surfaces (3, 4) and a portion of the first and second surfaces (1, 2),

wherein the connection portion includes a nickel electrode layer (131a, 132a) connected to the internal electrodes (121, 122),

the band portion includes a glass layer (131b, 132b),

and the external electrodes (131, 132) further include a copper electrode layers (131c, 132c) disposed on the nickel electrode layers (131a, 132a) and the borosilicate glass layers (131b, 132b).

## Description

### CROSS-REFERENCE TO RELATED APPLICATION(S)

This application claims benefit of priority to Korean Patent Application No. 10-2023-0162240 filed on November 21, 2023, in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, is a chip-type condenser mounted on the printed circuit boards of various types of electronic product, such as image display devices including a liquid crystal display (LCD) and a plasma display panel (PDP), computers, smartphones and mobile phones, and serves to charge or discharge electricity therein or therefrom.

The multilayer ceramic capacitor may be used as a component in various electronic devices due to having a small size, ensuring high capacitance and being easily mounted. With the miniaturization and high output power of various electronic devices such as computers and mobile devices, demand for miniaturization and high capacitance of multilayer ceramic capacitors has also been increasing.

Meanwhile, internal electrodes of typical multilayer electronic components mainly include nickel, and external electrodes mainly include copper, but diffusion occurs between different metals to form an alloy, and when copper diffuses excessively toward nickel during high-temperature heat treatment, there may be a risk of radiation cracks occurring in a ceramic body.

Additionally, glass may be added to the external electrode to improve bonding strength between the external electrode and the ceramic body, and when glass is excessively disposed in a region in which the internal electrode and the external electrode are connected, there may be a risk that electrical connectivity may deteriorate.

### SUMMARY

An aspect of the present disclosure is to prevent cracks from being generated in a ceramic body by suppressing formation of an alloy between an internal electrode and an external electrode.

An aspect of the present disclosure is to improve electrical connectivity between the internal electrode and external electrode of a multilayer electronic component. An aspect of the present disclosure is to improve moisture resistance reliability by suppressing the penetration of external moisture and plating solution.

However, the aspects of the present disclosure are not limited to the above-described contents, and may be more easily understood in the process of describing specific example embodiments of the present disclosure.

A multilayer electronic component according to an example embodiment of the present disclosure may include: a body including a dielectric layer and internal electrodes alternately disposed with the dielectric layer in a first direction, and first and second surfaces opposing each other in the first direction, third and fourth surfaces connected to the first and second surfaces and opposing each other in a second direction, and fifth and sixth surfaces connected to the first to fourth surfaces and opposing each other in a third direction; and an external electrode including a connection portion disposed on the third and fourth surfaces, and a band portion in contact with the connection portion and disposed on a portion the first and second surfaces; and wherein the external electrode may include a nickel electrode layer connected to the internal electrode and disposed on the connection portion, a glass layer disposed on the band portion, and a copper electrode layer disposed on the nickel electrode layer and the glass layer.

A multilayer electronic component according to another example embodiment of the present disclosure may include: a body including a dielectric layer and internal electrodes alternately disposed with the dielectric layer in a first direction, and first and second surfaces opposing each other in the first direction, third and fourth surfaces connected to the first and second surfaces and opposing each other in a second direction, and fifth and sixth surfaces connected to the first to fourth surfaces and opposing each other in a third direction; and an external electrode including a connection portion disposed on the third and fourth surfaces, and a band portion in contact with the connection portion and disposed on a portion of the first and second surfaces, wherein the external electrode includes a first electrode layer connected to the internal electrode and disposed on the connection portion, a glass layer disposed on the band portion, and a second electrode layer disposed on the first electrode layer and the glass layer, and a main component metal included in the first electrode layer and a main component metal included in the internal electrode are identical to each other.

One of the various effects of the present disclosure is to improve reliability by suppressing the formation of cracks in the ceramic body.

One of the various effects of the present disclosure is to improve electrical connectivity between the internal electrode and the external electrode.

One of the various effects of the present disclosure is to improve moisture resistance reliability by suppressing the penetration of external moisture and plating solution.

However, advantages and effects of the present application are not limited to the foregoing content and may be more easily understood in the process of describing a specific example embodiment of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a schematic cross-sectional view taken along line I-I' of FIG. 1;
FIG. 3 is a schematic cross-sectional view taken along line II-II' of FIG. 1; and
FIG. 4 is a cross-sectional view taken along line I-I' of FIG. 1, in a multilayer electronic component according to another example embodiment of the present disclosure.

### DETAILED DESCRIPTION

Hereinafter, example embodiments of the present disclosure will be described with reference to specific example embodiments and the attached drawings. The example embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

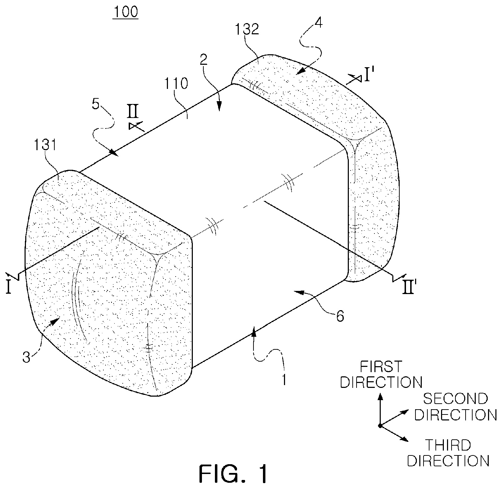

FIG. 1 is a perspective view schematically illustrating a multilayer electronic component according to an example embodiment of the present disclosure.

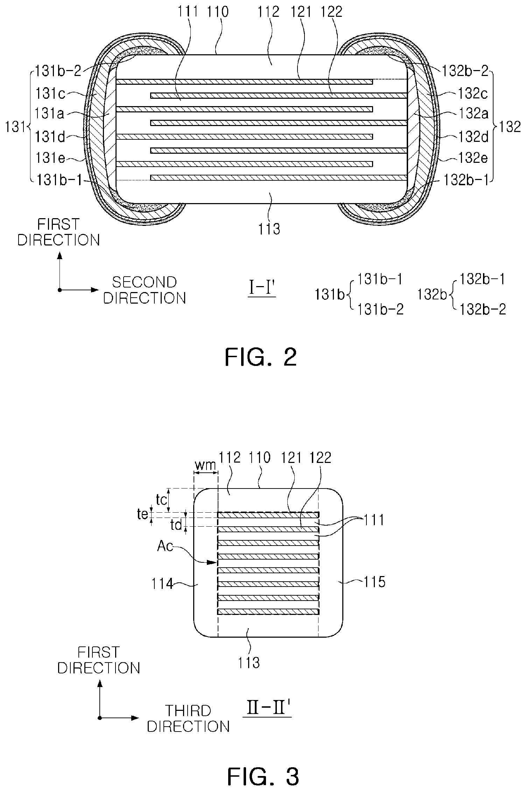

FIG. 2 is a schematic cross-sectional view taken along line I-I' of FIG. 1.

FIG. 3 is a schematic cross-sectional view taken along line II-II' of FIG. 1.

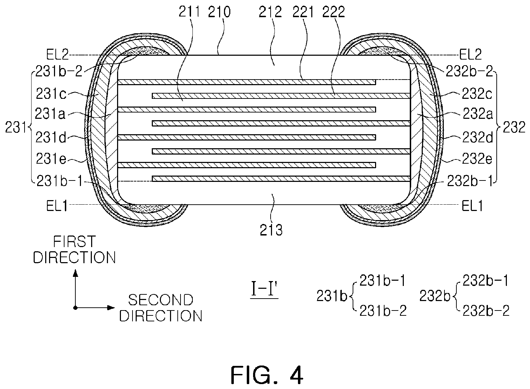

FIG. 4 is a cross-sectional view taken along line I-I' of FIG. 1, in a multilayer electronic component according to another example embodiment of the present disclosure.

Hereinafter, a multilayer electronic component according to some example embodiments of the present disclosure will be described in detail with reference to FIGS. 1 to 4. However, as an example of a multilayer electronic component, a multilayer ceramic capacitor will be described, but the multilayer electronic component of the present disclosure may also be applied to various electronic products using dielectric compositions, such as inductors, piezoelectric elements, varistors, or thermistors.

A multilayer electronic component 100 according to some example embodiments of the present disclosure may include: a body 110 including a dielectric layer 111 and internal electrodes 121 and 122 arranged alternately with the dielectric layer 111 in a first direction, and including first and second surfaces 1 and 2 opposing each other in the first direction, third and fourth surfaces 3 and 4 connected to the first and second surfaces 1 and 2 and opposing each other in a second direction, and fifth and sixth surfaces 5 and 6 connected to the first to fourth surfaces 1, 2, 3 and 4 and opposing each other in a third direction; and external electrodes 131 and 132 including a connection portion disposed on the third and fourth surfaces 3 and 4, and band portion in contact with the connection portion and disposed on a portion of the third and fourth surfaces and a portion of the first and second surfaces 1 and 2, and the external electrodes 131 and 132 may include nickel electrode layers 131a and 132a connected to the internal electrodes 121 and 122 and disposed in the connection portions, glass layers 131b and 132b disposed on the band portions, and copper electrode layers 131c and 132c disposed on the nickel electrode layers 131a and 132a and the glass layers 131b and 132b.

The body 110 may include dielectric layers 111 and internal electrodes 121 and 122 alternately stacked.

More specifically, the body 110 may include a capacitance forming portion Ac disposed inside the body 110, and including a first internal electrode 121 and a second internal electrode 122 alternately arranged to face each other with the dielectric layer 111 interposed therebetween to form capacitance.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with entirely straight lines, but may have a substantially hexahedral shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction.

In a state in which a plurality of dielectric layers 111 included in the body 110 are sintered, boundaries between adjacent dielectric layers 111 may be integrated so as to be difficult to identify without using a scanning electron microscope (SEM).

The materials included in the dielectric layer 111 are not limited as long as sufficient electrostatic capacity may be obtained therewith. In general, a perovskite (ABO₃)-based material may be used, and, for example, a barium titanate-based material, a lead composite perovskite-based material, or a strontium titanate-based material may be used. The barium titanate-based material may include BaTiOs-based ceramic particles, and examples of ceramic particles may include BaTiO₃, and (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1), which are formed by partially replaced by calcium (Ca) and zirconium (Zr) in BaTiO₃.

Additionally, as the materials included in the dielectric layer 111, various ceramic additives, organic solvents, binders, dispersants, and the like, may be added to particles such as barium titanate (BaTiOs) according to the purpose of the present disclosure.

A thickness td of the dielectric layer 111 is not limited.

However, in order to achieve high capacitance of the multilayer electronic component, a thickness of the dielectric layer 111 may be 3.0 um or less, and in order to more easily achieve miniaturization and high capacitance of the multilayer electronic component, the thickness of the dielectric layer 111 may be 1.0 um or less, preferably 0.6 um or less, and more preferably 0.4 um or less.

Here, the thickness td of the dielectric layer 111 may refer to a thickness td of the dielectric layer 111 disposed between the first and second internal electrodes 121 and 122.

Meanwhile, the thickness td of the dielectric layer 111 may refer a first directional size of the dielectric layer 111. Additionally, the thickness td of the dielectric layer 111 may refer to an average thickness td of the dielectric layer 111, and may refer to an average size of the dielectric layer 111 in the first direction.

The average size of the dielectric layer 111 in the first direction may be measured by scanning first and second directional cross-sections of the body 110 with a scanning electron microscope (SEM) of 10,000X magnification. More specifically, the average size of one dielectric layer 111 in the first direction may be an average value calculated by measuring the first directional size of one dielectric layer 111 at 30 points spaced apart from each other at equal intervals in the second direction in the scanned image. The 30 points spaced apart from each other at equal intervals may be designated in the capacitance forming portion Ac. Additionally, when the average value is measured by extending an average value measurement up to 10 dielectric layers 111, an average thickness of the dielectric layers 111 in the first directional may be further generalized.

The internal electrodes 121 and 122 may be alternately stacked with the dielectric layer 111.

The internal electrodes 121 and 122 may include a first internal electrode 121 and a second internal electrode 122, and the first and second internal electrodes 121 and 122 are alternately arranged to face each other with the dielectric layer 111 included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. A first external electrode 131 may be disposed on the third surface 3 of the body 110 and may be connected to the first internal electrode 121, and a second external electrode 132 may be disposed on the fourth surface 4 of the body 110 and may be connected to the second internal electrode 122.

That is, the first internal electrode 121 may be connected to the first external electrode 131 without being connected to the second external electrode 132, and the second internal electrode 122 may be connected to the second external electrode 132 without being connected to the first external electrode 131. In this case, the first and second internal electrodes 121 and 122 may be electrically separated from each other by the dielectric layer 111 disposed in the middle.

Meanwhile, the body 110 may be formed by alternately stacking ceramic green sheets on which the first internal electrode 121 is printed and ceramic green sheets on which the second internal electrode 122 are printed, and then sintering the ceramic green sheets.

The materials included in the internal electrodes 121 and 122 is not particularly limited, and any materials having excellent electrical conductivity may be used. For example, the internal electrodes 121 and 122 may include one or more selected from the group consisting of nickel (Ni), copper (Cu), palladium (Pd), silver (Ag), gold (Au), platinum (Pt), tin (Sn), tungsten (W), titanium (Ti), and alloys thereof.

Additionally, the internal electrodes 121 and 122 may be formed by printing a conductive paste for internal electrodes including one or more selected from the group consisting of nickel (Ni), copper (Cu), palladium (Pd), silver (Ag), gold (Au), platinum (Pt), tin (Sn), tungsten (W), titanium (Ti) and alloys thereof on a ceramic green sheet. A printing method for the conductive paste for internal electrodes may be a screen-printing method or a gravure printing method, but the present disclosure is not limited thereto.

Meanwhile, a thickness te of the internal electrodes 121 and 122 does not need to be particularly limited.

However, in order to achieve high capacitance of the multilayer electronic component, the thickness of the internal electrodes 121 and 122 may be 1.0 um or less, and in order to more easily achieve miniaturization and high capacitance of the multilayer electronic component, the thickness of the internal electrodes 121 and 122 may be 0.6 um or less, and more preferably 0.4 um or less.

Here, the thickness te of the internal electrodes 121 and 122 may refer to a first directional size of the internal electrodes 121 and 122. Additionally, the thickness te of the internal electrodes 121 and 122 may refer to an average thickness te of the internal electrodes 121 and 122, and may refer to an average size of the internal electrodes 121 and 122 in the first direction.

The average size of the internal electrodes 121 and 122 in the first direction may be measured by scanning images of the first and second directional cross-sections of the body 110 with a scanning electron microscope (SEM) of 10,000X magnification. More specifically, the average size of one internal electrode in the first direction may be an average value calculated by measuring the first directional size of one internal electrode at 30 points spaced apart from each other at equal intervals in the second direction in the scanned image. The 30 points spaced apart from each other at equal intervals may be designated in the capacitance forming portion Ac. Additionally, when the average value is measured by extending an average value measurement up to 10 internal electrodes, an average thickness of the internal electrode in the first directional may be further generalized.

Meanwhile, in an example embodiment of the present disclosure, the average thickness td of at least one of the plurality of dielectric layers 111 and the average thickness te of at least one of the plurality of internal electrodes 121 and 122 may satisfy 2×te < td.

In other words, the average thickness td of one dielectric layer 111 may be larger than twice the average thickness te of one internal electrode 121 or 122. In some embodiments, the average thickness td of the plurality of dielectric layers 111 may be larger than twice the average thickness te of the plurality of internal electrodes 121 and 122.

In general, high-voltage electronic components have a major issue due to reliability issues due to a decrease in breakdown voltage (BDV) in a high-voltage environment.

Accordingly, in order to prevent a decrease in the breakdown voltage under a high voltage environment, the average thickness td of the dielectric layer 111 may be made larger than twice the average thickness te of the internal electrodes 121 and 122, so that the thickness of the dielectric layer, which is a distance between internal electrodes, may be increased, thereby improving the breakdown voltage (BDV) characteristics.

When the average thickness td of the dielectric layer 111 is less than or equal to twice the average thickness te of the internal electrodes 121 and 122, an average thickness of the dielectric layer, which is a distance between the internal electrodes, may be thin, which may reduce the breakdown voltage, and a short circuit may occur between the internal electrodes.

Meanwhile, the body 110 may include cover portions 112 and 113 disposed on both end-surfaces of the capacitance forming portion Ac in the first direction.

Specifically, the body 110 may include a first cover portion 112 disposed on one surface of the capacitance forming portion Ac in the first direction, and a second cover portion 113 disposed on the other surface of the capacitance forming portion Ac in the first direction, and more specifically, the body 110 may include an upper cover portion 112 disposed above the capacitance forming portion Ac in the first direction, and a lower cover portion 113 disposed below the capacitance forming portion Ac in the first direction.

The upper cover portion 112 and the lower cover portion 113 may be formed by stacking a single dielectric layer 111 or two or more dielectric layers 111 on upper and lower surfaces of the capacitance forming portion Ac in the first direction, respectively, and may basically serve to prevent damage to the internal electrodes 121 and 122 due to physical or chemical stress.

The upper cover portion 112 and the lower cover portion 113 do not include the internal electrodes 121 and 122, and may include the same material as dielectric layer 111. That is, the upper cover portion 112 and the lower cover portion 113 may include a ceramic material, and may include, for example, a barium titanate (BaTiO₃)-based ceramic material.

Meanwhile, the thickness tc of the cover portions 112 and 113 does not need to be particularly limited.

However, in order to more easily achieve miniaturization and high capacitance of the multilayer electronic component, the thickness tc of the cover portions 112 and 113 may be 100 um or less, preferably 30 um or less, and more preferably 20 um or less in ultra-small products.

Here, the thickness tc of the cover portions 112 and 113 may refer to a first directional size of the cover portions 112 and 113 in the first direction. Additionally, the thickness tc of the cover portions 112 and 113 may refer to the average thickness tc of the cover portions 112 and 113, and may refer to an average size of the cover portions 112 and 113 in the first direction.

The average size of the cover portions 112 and 113 in the first direction may be measured by scanning images of the first and second directional cross-sections of the body 110 with a scanning electron microscope (SEM) of 10,000X magnification. More specifically, the average size thereof may refer to an average value calculated by measuring the first directional size at 30 areas equally spaced from each other in the second direction in the image obtained by scanning one cover portion.

Additionally, the average size of the cover portion in the first direction measured by the above-described method may have substantially the same size as the average size of the cover portion in the first direction in the first and third directional cross-sections of the body 110.

Meanwhile, the multilayer electronic component 100 may include side margin portions 114 and 115 disposed on both third directional end-surfaces of the body 110 in the third direction.

More specifically, the side margin portions may include a first side margin portion 114 disposed on the fifth surface 5 of the body 110 and a second side margin portion 115 disposed on the sixth surface 6 of the body 110.

As illustrated in FIG. 2, the side margin portions 114 and 115 may refer to a region between the end-surfaces of the first and second internal electrodes 121 and 122 in the third direction and a boundary surface of the body 110, based on the first and third directional cross-sections of the body 110.

The side margin portions 114 and 115 may be formed by applying a conductive paste to form the internal electrodes 121 and 122 except where the side margin portions 114 and 115 are to be formed on the ceramic green sheet applied to the capacitance forming portion Ac, and cutting the stacked internal electrodes 121 and 122 so that the internal electrodes 121 and 122 are exposed to the fifth and sixth surfaces 5 and 6 of the body 110 in order to suppress a step portion caused by the internal electrodes 121 and 122, and then stacking a single dielectric layer 111 or two or more dielectric layers 111 on both third directional end-surfaces of the capacitance forming portion Ac in the third direction.

The side margin portions 114 and 115 may basically serve to prevent damage to the internal electrodes 121 and 122 due to physical or chemical stress.

The first side margin portion 114 and the second side margin portion 115 do not include the internal electrodes 121 and 122 and may include the same material as the dielectric layer 111. That is, the first side margin portion 114 and the second side margin portion 115 may include a ceramic material, and may include, for example, a barium titanate (BaTiO₃) based ceramic material.

Meanwhile, a width wm of the first and second side margin portions 114 and 115 does not need to be particularly limited.

However, in order to more easily achieve miniaturization and high capacitance of the multilayer electronic component 100, the width wm of the side margin portions 114 and 115 may be 100 um or less, preferably 30 um or less, and more preferably 20 um or less in ultra-small products.

Here, the width wm of the side margin portions 114 and 115 may refer to a third directional size of the side margin portions 114 and 115. Additionally, the width wm of the side margin portions 114 and 115 may refer to the average width wm of the side margin portions 114 and 115, and may refer to an average size of the side margin portions 114 and 115 in the third direction.

The average size of the side margin portions 114 and 115 in the third direction may be measured by scanning images of the first and third directional cross-sections of the body 110 with a scanning electron microscope (SEM) of 10,000X magnification. More specifically, the average size thereof may refer to an average value calculated by measuring the third directional size at 10 areas equally spaced apart from each other in the first direction in an image obtained by scanning one side margin portion.

In some example embodiments of the present disclosure, a structure in which the ceramic electronic component 100 has two external electrodes 131 and 132 is described, but the number or shape of the external electrodes 131 and 132 may be changed depending on the shape of the internal electrodes 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may be connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Additionally, the external electrodes 131 and 132 may be disposed to extend to a portion of the first and second surfaces 1 and 2 of the body 110, and may also be disposed to extend to a portion of the fifth and sixth surfaces 5 and 6 of the body 110. That is, the first external electrode 131 may be disposed on the third surface and a portion of the first, second, fifth, and sixth surfaces 1, 2, 5 and 6 of the body 110 by extending from the area disposed on the third surface 3 of the body 110, and the second external electrode 132 may disposed on the fourth surface 4 and a portion of the first, second, fifth and sixth surfaces 1, 2, 5 and 6 of the body 110 by extending from the area disposed on the fourth surface 4 of the body 110.

More specifically, the external electrodes 131 and 132 may include connection portions disposed on the third and fourth surfaces 3 and 4, respectively, and band portions in contact with the connection portions and disposed on a portion of the first and second surfaces 1 and 2.

Meanwhile, the external electrodes 131 and 132 may be formed using any materials as long as the material has electrical conductivity, such as a metal, and the specific material may be determined in consideration of electrical properties, structural stability, and the like, and may further have a multilayer structure.

In some example embodiments of the present disclosure, the external electrodes 131 and 132 may include first external electrode layers connected to the internal electrodes 121 and 122, respectively, and disposed on the connection portion in contact with the third and fourth surfaces 3 and 4 of the body 110, respectively; glass layers 131b and 132b in contact with the connection portion and disposed on the band portion in contact with a portion of the first and second surfaces 1 and 2 of the body 110; and second electrode layers disposed on the first electrode layers and the glass layers 131b and 132b. In some example embodiments of the present disclosure, a main component metal included in the first electrode layers may be the same as a main component metal included in the internal electrodes 121 and 122.

In the present disclosure, as an example of a more specific method of measuring the content of elements included in each component of the multilayer electronic component 100, in the case of destruction methods, components may be analyzed using an Energy Dispersive X-ray Spectroscopy (EDS) mode of the scanning electron microscopy (SEM), an EDS mode of a transmission electron microscope (TEM) or an EDS mode of a scanning transmission electron microscope (STEM). First, a thinly sliced analysis sample is prepared using Focused Ion Beam (FIB) equipment in a region to be measured. Then, a damaged layer on a surface of the thinned sample is removed using xenon (Xe) or argon (Ar) ion milling, and then, qualitative/quantitative analysis is performed by mapping each of components to be measured in the image obtained using SEM-EDS, TEM-EDS, or STEM-EDS. In this case, the qualitative/quantitative analysis graph of each component may be expressed in terms of mass percentage (wt%), atomic percentage (at%), or mole percentage (mol%) of each element. In this case, the qualitative/quantitative analysis graph thereof may be expressed by converting the number of moles of another specific component to the number of moles of a specific component.

Through another method, a chip may be crushed and a region to be measured may be selected, and in a region including the selected dielectric microstructure, the components of the corresponding region may be analyzed using devices such as inductively coupled plasma spectroscopy (ICP-OES) and inductively coupled plasma mass spectrometry (ICP-MS).

Additionally, in the present disclosure, "main component" may refer to a component that occupies a relatively large weight or atomic percentage ratio compared to other components, and may denote at least 50% by weight of a component based on the weight of the entire composition or the entire external electrode, or at least 50 at% by atomic percentage.

When the main component metal of the internal electrodes 121 and 122 and the main component metal of the external electrodes 131 and 132, especially the first electrode layers, are identical to each other, during a high-temperature heat treatment process, alloy formation due to interdiffusion may not occur, and the generation of radiation cracks due to diffusion of the main component metal of the first electrode layers into the internal electrodes 121 and 122 may be suppressed, thereby improving the reliability and the lifespan of the multilayer electronic component 100.

For example, the main metal component of the internal electrodes 121 and 122 may be nickel (Ni), and the first electrode layers may be nickel electrode layers 131a and 132a whose main component metal is nickel (Ni), but the present disclosure is not particularly limited thereto. For example, as described above, the internal electrodes 121 and 122 may use any materials as long as the material has excellent electrical conductivity, and specifically, examples of the materials included in the internal electrodes 121 and 122 may include one or more selected from the group consisting of nickel (Ni), copper (Cu), palladium (Pd), silver (Ag), gold (Au), platinum (Pt), tin (Sn), tungsten (W), titanium (Ti), and alloys thereof. Additionally, the main component metals of the first electrode layers may include one or more selected from the group consisting of nickel (Ni), copper (Cu), palladium (Pd), silver (Ag), gold (Au), platinum (Pt), tin (Sn), tungsten (W), titanium (Ti), and alloys thereof.

The first electrode layers may be disposed in the connection portion and may include a first conductive metal and glass.

More specifically, the first external electrode 131 may include a first electrode layer disposed in a connection portion on the third surface, and the first electrode layer of the first external electrode may include a first conductive metal and glass. The second external electrode 132 may include a first electrode layer disposed in a connection portion of the fourth surface, and the first electrode layer of the second external electrode may include a first conductive metal and glass. The main component in the first electrode layers of the first and second external electrodes is the first conductive metal.

That is, the first electrode layers may be formed by applying a conductive paste including the first conductive metal and glass to the connection portion being in contact with the third and fourth surfaces 3 and 4 of the body 110 and then sintering the conductive paste.

As described above, the first conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof, but the present disclosure is not particularly limited thereto.

The first electrode layers may include glass, and the type of glass is not particularly limited. The glass included in the first electrode layers may serve to improve adhesion to the body 110.

However, the glass layers 131b and 132b may be disposed on the band portions of the external electrodes 131 and 132, thereby providing excellent adhesion between the glass layers 131b and 132b and the body 110.

That is, the glass layers 131b and 132b may be disposed on the band portion, thereby improving the adhesion between the body 110 and the second electrode layers, and further preventing delamination between the body 110 and the external electrodes 131 and 132 from occurring.

Furthermore, among the bonding interfaces between the external electrodes 131 and 132 and the body 110, the glass layers 131b and 132b may be disposed in a region adjacent to ends of the external electrodes 131 and 132, which serve as external moisture penetration paths, thereby improving moisture resistance reliability by suppressing penetration of moisture or plating solution.

The glass layers 131b and 132b may be disposed on the band portion and may include glass.

More specifically, the first external electrode 131 may include a glass layer 131b disposed on the band portion, and the glass layer 131b of the first external electrode may include: a first glass layer 131b-1 disposed on a portion of the first surface 1, and a boundary between the first surface 1 and the third surface 3; and a second glass layer 131b-2 disposed on a portion of the second surface 2, and a boundary between the second surface 2 and the third surface 3.

The second external electrode 132 may include a glass layer 132b disposed on the band portion, and the glass layer 132b of the second external electrode may include a first glass layer 132b-1 disposed on a portion of the first surface 1, and a second glass layer 132b-2 disposed on a portion of the second surface 2.

Here, the glass included in the glass layers 131b and 132b may include, for example, borosilicate glass, and the glass layers 131b and 132b may include at least one of Na (otherwise called sodium), barium (Ba), zinc (Zn), calcium (Ca), iron (Fe), and tin (Sn). Here, the main component of the glass layer may be glass, and may, for example, borosilicate glass.

The borosilicate glass is a type of low melting point glass, and may further lower the melting point by further including at least one of Na, Ba, Zn, Ca, Fe, and Sn, thereby further promoting the formation of the glass layers 131b and 132b, and making it possible to more easily control the shape of the glass layers 131b and 132b during a manufacturing process.

A method of forming the glass layers 131b and 132b is not particularly limited, but the glass layers 131b and 132b may be formed by forming the first electrode layers disposed in the connection portion, and then applying a conductive paste including a second conductive metal and glass to the first electrode layers, and applying a conductive paste including a second conductive metal and glass to the band portion. Here, the conductive paste including the second conductive metal and glass may form second electrode layers to be described below.

In this case, when the glass included in the second electrode layers is used as a low melting point glass such as borosilicate glass, glass layers 131b and 132b may be formed in a position of a band portion in contact with the body 110 except for the connection portion in which the first electrode layers are formed. In other words, during the sintering process of a conductive paste including the second conductive metal and glass, since the wettability of the glass is higher in the body than in the first electrode layers, the glass may gather in the band portion to form the glass layers 131b and 132b.

The glass layers 131b and 132b disposed on the band portion may be formed in a layer shape along a surface of the body, but the present disclosure is not particularly limited thereto, and the glass layers 131b and 132b may have a convex shape and may be disposed to cover corners of the body 110. Here, the corners of the body may be in the vicinity of a region in which the first and second surfaces of the body and the third and fourth surfaces of the body are in contact with each other, and may refer to a curved region at a corner based on the drawings. Meanwhile, the shape of the glass layers 131b and 132b may vary depending on the size of the multilayer electronic component and the length and width of the band portion, and may vary depending on the glass content (wt%) in the conductive paste including the second conductive metal and glass.

Meanwhile, with reference to FIG. 2, for example, the glass layers 131b and 132b may be in contact with the first external electrode layers disposed in the connection portion, and may be disposed in the band portion by expending from the first electrode layers. In this case, the glass layers 131b and 132b may be disposed to contact the body 110, including the corners of the body 110, as described above, but the present disclosure is not particularly limited thereto.

When described with reference to FIG. 4 according to another example embodiment, the glass layers 231b and 232b may not be disposed between an extension line EL1 of the first surface and an extension line EL2 of the second surface.

More specifically, the first glass layer 231b-1 of the first external electrode may be disposed only in a lower portion of EL1 and may not be disposed in an upper portion of EL1, and the second glass layer 231b-2 of the first external electrode may be disposed only in an upper portion of EL2 and may not be disposed in a lower portion of EL2. That is, the glass layer 231b of the first external electrode may not be disposed between EL1 and EL2 in the first direction, and may not be placed on the third surface 3.

The first glass layer 232b-1 of the second external electrode may be disposed only in the lower portion of EL1 and may not be disposed in the upper portion of EL1, and the second glass layer 232b-2 of the first external electrode may be disposed only in the upper portion of EL2 and may not be disposed in the lower portion of EL2. That is, the glass layer 132b of the second external electrode may not be disposed between EL1 and EL2 in the first direction and may not be disposed on the fourth surface 4.

Accordingly, the glass layers 231b and 232b may not be disposed between EL1 and EL2 and may not be disposed on the third and fourth surfaces 3 and 4.

The external electrodes 131 and 132 may include first electrode layers and second electrode layers disposed on the glass layers 131b and 132b, and the second electrode layers may include a second conductive metal and glass.

The second conductive metal may include one or more selected from the group consisting of nickel (Ni), copper (Cu), palladium (Pd), silver (Ag), gold (Au), platinum (Pt), tin (Sn), tungsten (W), titanium (Ti) and alloys thereof, but the present disclosure is not particularly limited thereto.

The second conductive metal included in the second electrode layers may be different from the first conductive metal included in the first electrode layers, but the present disclosure is not particularly limited thereto, and the first conductive metal and the second conductive metal may be identical to each other, and when including a plurality of conductive metals, at least one conductive metal may be the same.

Even if the first conductive metal and the second conductive metal are different from each other, an alloy may not be formed between the first conductive metal and the second conductive metal. The metal included in the first electrode layers may be oxidized during a sintering process of the first electrode layers, so that metal oxides of the first electrode layers may be formed on surfaces of the first electrode layers, and metal oxides of the first electrode layers may be disposed between the first electrode layers and the second electrode layers, which correspond to an interface between the first electrode layers and the second electrode layers.

For example, when the main component of the first conductive metal of the first electrode layers is nickel (Ni) and the main component of the second conductive metal of the second electrode layers is copper (Cu), in the case of first sintering and forming the electrode layers 131a and 132a, an oxide layer, for example, a nickel (Ni) oxide layer, may be formed on the surfaces of the first electrode layers, and the second electrode layers may be disposed on the nickel (Ni) oxide layer. In other words, the nickel (Ni) oxide layer may be formed between the first electrode layers and the second electrode layers. Accordingly, nickel (Ni) of the first electrode layers and copper (Cu) of the second electrode layers 131c and 132c may not react, and a Cu-Ni alloy layer may not be formed between the first electrode layers and the second electrode layers, but the present disclosure is not particularly limited thereto.

The glass included in the second electrode layers is not particularly limited, but may include borosilicate-based glass, and may be identical to glass included in the glass layers 131b and 132b.

Here, the glass included in the second electrode layers may further include at least one of sodium (Na), barium (Ba), zinc (Zn), calcium (Ca), iron (Fe), and tin (Sn) .

Borosilicate glass is a type of low melting point glass, and may further lower the melting point by further including at least one of Na, Ba, Zn, Ca, Fe, and Sn.

A method of forming the second electrode layers is not particularly limited, but the second electrode layers may be formed by applying the first electrode layers disposed in the connection portion, and then applying a conductive paste including a second conductive metal and glass to the first electrode layers. Here, the glass may form the glass layers 131b and 132b described above, and the conductive paste including the second conductive metal and glass may become the second electrode layers disposed on the first electrode layers and the glass layers 131b and 132b.

Meanwhile, the content of glass included in the second electrode layers may be 8 wt% or more and 25 wt% or less.

A method of measuring the content of glass included in the second electrode layers is not particularly limited, but among the first and second directional cross-sections based on a third directional center of the multilayer electronic component 100, regions of the second electrode layers may be measured using a scanning electron microscope (SEM) or a transmission electron microscope (TEM). For example, the content of glass may be obtained by measuring the content of elements included in a region in which glass is observed as compared to a total content of elements included in a 10 µm × 10 um region of the cross-sections of the second electrode layers. Here, glass may refer to a region in which a high content of silicon (Si) is observed, or may region a region of a second phase including silicon (Si).

The external electrodes 131 and 132 may include plating layers 131d and 132d disposed on the second electrode layers.

The plating layers 131d and 132d may serve to improve mounting characteristics.

The types of plating layers 131d and 132d are not particularly limited, and the drawings illustrates two plating layers, but one plating layer may be provided, or two or more plating layers may be provided. For example, the plating layer may be a single plating layer including one or more of nickel (Ni), tin (Sn), palladium (Pd) and alloys thereof, and may be formed in a plurality of layers.

For more specific examples of the plating layers 131d and 132d, the plating layers 131d and 132d may be Ni plating layers or Sn plating layers, and may be in the form in which the Ni plating layer and the Sn plating layer are formed sequentially on the second electrode layers, and may be in the form in which the Sn plating layer, the Ni plating layer and the Sn plating layer are formed sequentially. Additionally, the plating layer may include a plurality of Ni plating layers and/or a plurality of Sn plating layers.

The size of the multilayer electronic component 100 does not need to be particularly limited.

However, in order to achieve both miniaturization and high capacitance, because the thicknesses of the dielectric layer and the internal electrodes must be thinned to increase the number of stacks, the effect according to the present disclosure may be more noticeable in a multilayer electronic component 100 having a size of 1005 (length × width: 1.0 mm × 0.5 mm) or less.

Although the example embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component (100), comprising:
a body (110) including a dielectric layer (111) and internal electrodes (121, 122) alternately disposed with the dielectric layer (111) in a first direction, and first and second surfaces (1, 2) opposing each other in the first direction, third and fourth surfaces (3, 4) connected to the first and second surfaces (1, 2) and opposing each other in a second direction, and fifth and sixth surfaces (5, 6) connected to the first to fourth surfaces (1, 2, 3, 4) and opposing each other in a third direction; and
external electrodes (131, 132) including a connection portion disposed on the third and fourth surfaces (3, 4), and a band portion in contact with the connection portion and disposed on a portion of the third and fourth surfaces (3, 4) and a portion of the first and second surfaces (1, 2),
wherein the connection portion includes a nickel electrode layer (131a, 132a) connected to the internal electrodes (121, 122),
the band portion includes a glass layer (131b, 132b), and
the external electrodes (131, 132) further include a copper electrode layer (131c, 132c) disposed on the nickel electrode layer (131a, 132a) and the glass layer (131b, 132b).

2. The multilayer electronic component (100) according to claim 1, wherein the internal electrodes (121, 122) include nickel.

3. The multilayer electronic component (100) according to claim 1, wherein the glass layer (131b, 132b) includes borosilicate glass.

4. The multilayer electronic component (100) according to claim 3, wherein a main component of the glass layer (131b, 132b) is borosilicate glass.

5. The multilayer electronic component (100) according to claim 3, wherein the glass layer (131b, 132b) further includes at least one selected from the group consisting of sodium, barium, zinc, calcium, iron, and tin.

6. The multilayer electronic component (200) according to claim 1, wherein the band portion is disposed only on the portion of the first and second surfaces (1, 2), and
the glass layer (231b, 232b) is not disposed between an extension line (EL1, EL2) of the first surface and an extension line of the second surface.

7. The multilayer electronic component (100) according to claim 1, wherein a nickel oxide layer is disposed between the nickel electrode layer (131a, 132a) and the copper electrode layer (131c, 132c).

8. The multilayer electronic component (100) according to claim 1, wherein the copper electrode layer (131c, 132c) includes glass.

9. The multilayer electronic component (100) according to claim 8, wherein the glass included in the copper electrode layer (131c, 132c) includes the same glass as glass included in the glass layer (131b, 132b).

10. The multilayer electronic component (100) according to claim 9, wherein the glass included in the copper electrode layer (131c, 132c) includes borosilicate glass.

11. The multilayer electronic component (100) according to claim 10, wherein the glass included in the copper electrode layer (131c, 132c) further includes at least one selected from the group consisting of sodium, barium, zinc, calcium, iron, and tin.

12. The multilayer electronic component (100) according to claim 8, wherein a content of the glass included in the copper electrode layer (131c, 132c) is 8 wt% or more and 25 wt% or less.

13. The multilayer electronic component (100) according to claim 1, wherein the external electrodes (131, 132) further include a plating layer (131d, 132d) disposed on the copper electrode layer (131c, 132c).

14. The multilayer electronic component (100) according to claim 13, wherein the plating layer includes a first plating layer (131d, 132d) disposed on the copper electrode layer (131c, 132c), and a second plating layer (131e, 132e) disposed on the first plating layer (131d, 132d).
